# DEMANDE DE BREVET EUROPEEN

(11) **EP 1 550 546 A1**
(43) Date de publication de la demande: **06.07.2005**
(21) Numéro de dépôt: 03079017.4
(22) Date de dépôt: 29.12.2003
(51) Int. Cl.: B29C 59/02, B29C 35/08, B32B 31/00, C09J 7/02, B29D 11/00

(54) **Procédé de microstructuration d'une surface de substrat souple multicouche, et substrat microstructuré**

(71) Demandeur: Mactac Europe S.A., 7060 Soignies (BE)
(72) Inventeur: Stocq, Robert Ghislain, 7320 Bernissart (BE)
(74) Mandataire: Schmitz, Yvon

(57) **Abrégé**

Procédé de microstructuration tridimensionnelle d'une surface de substrat souple, en particulier d'une surface d'adhésif, caractérisé en ce qu'il comprend l'application d'une première couche de silicone plane (2) et uniforme sur une surface d'un support (1), l'application sur la première couche de silicone (2) d'une seconde couche de silicone microstructurée (3) tridimensionnellement, lesdites premières (2) et seconde couches (3) de silicone se solidarisant pour former ainsi une microstructure tridimensionnelle commune comportant des zones assurant des propriétés d'antiadhérence sensiblement régulièrement réparties à la surface du support (1), et le dépôt de la surface de substrat souple, en particulier de la surface d'adhésif sur les couches de silicone précitées de manière à ce que ladite surface de substrat souple, en particulier d'adhésif soit microstructurée essentiellement par réplication inverse de la microstructure tridimensionnelle commune formée par les première (2) et seconde couches (3) de silicone, lesdites couches de silicone (2,3) étant fixées par durcissement, et films, notamment autoadhésifs tels que microstructurés par le procédé précité.

## Description

La présente invention est relative à un procédé de microstructuration tridimensionnelle d'une surface de substrat souple, en particulier d'une surface d'adhésif, ainsi qu'au produit et en particulier au film autoadhésif comportant une telle surface microstructurée tridimensionnellement.

Il est connu de prévoir des films d'adhésif sensibles à la pression, dont la topographie est conférée par la mise en contact de la surface microstructurée tridimensionnellement d'un revêtement protecteur pelable comme support, et qui est essentiellement l'inverse de la microstructure tridimensionnelle avec laquelle la surface d'adhésif est mise en contact, et des procédés de formation de tels films autoadhésifs. Selon ces procédés, les structures tridimensionnelles sont obtenues soit en embossant mécaniquement le support comportant un film plan de silicone soit en enduisant de la silicone sur un support présentant déjà une surface microstructurée, épousant alors la topographie du support. Bien que les procédés de formation de tels films autoadhésifs se révèlent en général plutôt satisfaisants ils sont d'une application limitée, ne pouvant être réalisés que sur des supports polyéthylénés ou polypropylénés coûteux, et ne permettent de former des microstructures dans la silicone par embossage à chaud qu'à des vitesses de l'ordre de 0,9 m/minute du cylindre gravé utilisé à cet effet, ce qui freine considérablement la productivité et élève les coûts de production des produits finis.

Un des buts de la présente invention consiste, par conséquent, à remédier aux inconvénients précités et à prévoir un procédé de microstructuration tridimensionnelle d'une surface de substrat souple, en particulier d'une surface d'adhésif, pouvant être réalisé sur n'importe quel type de substrat, tel que papiers, films plastiques ou autres, et permettant de travailler à très grande vitesse, en augmentant ainsi la productivité de façon considérable par rapport aux procédés connus antérieurs.

A cet effet, suivant la présente invention, le procédé de microstructuration tridimensionnelle précité comprend l'application d'une première couche de silicone sensiblement plane et uniforme sur une surface d'un support, l'application sur la première couche de silicone d'une seconde couche de silicone microstructurée tridimensionnellement, lesdites première et seconde couches de silicone se solidarisant pour former ainsi une microstructure tridimensionnelle commune comportant des zones assurant des propriétés d'antiadhérence sensiblement régulièrement réparties à la surface du support, et le dépôt de la surface de substrat souple, en particulier de la surface d'adhésif sur les couches de silicone précitées de manière à ce que ladite surface de substrat souple, en particulier d'adhésif soit microstructurée essentiellement par réplication inverse de la microstructure tridimensionnelle commune formée par les première et seconde couches de silicone, lesdites couches de silicone étant fixées par durcissement.

Avantageusement, la première couche de silicone comprend au moins un polyorganosiloxane fonctionnalisé à groupements 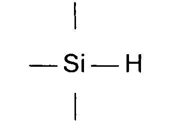 comme réticulant, et au moins un polyorganosiloxane fonctionnalisé pouvant réagir avec le réticulant par polycondensation, ou bien elle comprend un polyorganosiloxane fonctionnalisé à groupements 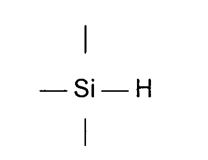 comme réticulant, et au moins un polyorganosiloxane fonctionnalisé à groupements 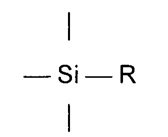 pouvant réagir avec le réticulant par polyaddition, R comportant au moins une insaturation éthylénique, et éventuellement, dans l'un ou l'autre des cas, un catalyseur d'activation de la réaction de réticulation précitée, et est durcie par chauffage ou par exposition à un rayonnement ultraviolet ou électronique.

Suivant un mode de réalisation avantageux de l'invention, la seconde couche de silicone précitée comprend au moins un polyorganosiloxane, et avantageusement un polydiméthylsiloxane à fonction acrylate et/ou époxy, et éventuellement un catalyseur d'activation.

Suivant un autre mode de réalisation avantageux de l'invention, la seconde couche de silicone comprend un polydiméthylsiloxane à fonction acrylate et un catalyseur de type cétonique, avantageusement de type benzophénone, ou bien elle comprend un polydiméthylsiloxane à fonction époxy et un catalyseur de type sel d'iodonium, et est durcie par exposition à un rayonnement ultraviolet.

Suivant encore un autre mode de réalisation avantageux, la seconde couche de silicone ne comprend pas de catalyseur d'activation et est durcie par exposition à un rayonnement électronique.

L'invention concerne également les films microstructurés tridimensionnellement, et les films autoadhésifs comportant une surface telle que microstructurée tridimensionnellement par le procédé précité, et comportant notamment des motifs décoratifs, publicitaires ou autres, notamment sur la surface opposée à la surface adhésive des films autoadhésifs.

Comme on l'a déjà signalé précédemment, pour conférer une microstructure tridimensionnelle à une surface d'un substrat souple, et en particulier à une surface d'adhésif on applique une première couche de silicone sensiblement plane et uniforme sur une surface d'un support, tel qu'en papier, par exemple calandré ou couché, ou un film plastique, tel que de polyéthylène, polyester, polypropylène, chlorure de polyvinyle ou analogue, et on applique sur la première couche de silicone une seconde couche de silicone microstructurée tridimensionnellement, de telle sorte que ces couches de silicone se solidarisent pour former ainsi une microstructure tridimensionnelle commune comportant des zones assurant des propriétés d'antiadhérence sensiblement régulièrement réparties à la surface du support. Ensuite, on dépose la surface de substrat souple, ou en particulier d'adhésif précitée sur les couches de silicone de manière à ce que ladite surface de substrat, en particulier d'adhésif soit microstructurée essentiellement par réplication inverse de la microstructure tridimensionnelle commune formée par la première et la seconde couche de silicone. A cet égard, on entend par l'expression "microstructurée essentiellement par réplication inverse" le fait que la topographie obtenue à la surface du substrat souple, en particulier de l'adhésif est le motif inverse de la topographie en surface formée par la première et la seconde couche de silicone dont les trois dimensions dans l'espace sont sensiblement similaires ou similaires à cette dernière.

Tout au long de la présente description ainsi que dans les revendications, on entend par "substrat" tout produit qui sera microstructuré par réplication inverse de la microstructure formée par la première et la seconde couche de silicone et par "support" tout produit sur lequel est appliquée la première couche de silicone ou couche de silicone sensiblement plane et uniforme.

La première couche de silicone sensiblement plane et uniforme est formée d'une composition de silicone à base d'un ou plusieurs polyorganosiloxanes (POS) fonctionnalisés à groupements 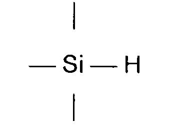 comme réticulant, et d'un ou plusieurs polyorganosiloxanes fonctionnalisés (résine de base) pouvant réagir avec le réticulant par polycondensation, et d'un catalyseur d'activation préférentiellement à base de platine ou de rhodium sauf dans le cas d'un durcissement de la couche par exposition à un rayonnement électronique. Suivant une variante, on pourrait utiliser comme résine de base un ou plusieurs polyorganosiloxanes fonctionnalisés à groupements 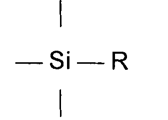 pouvant réagir avec le réticulant par polyaddition, R comportant au moins une insaturation éthylénique, avantageusement vinylique.

Cette composition de silicone peut de plus comprendre des additifs tels que ceux habituellement utilisés dans ce type d'applications, à savoir un modulateur d'adhérence par exemple à base de résine siliconée comprenant des motifs siloxyle, des accélérateurs et inhibiteurs de réaction, des pigments, des agents tensioactifs, des charges ou analogue. Pour faciliter l'application de la couche de silicone la composition de silicone précitée peut être liquide et diluée dans un solvant comme l'hexane ou le toluène et pour des raisons d'hygiène et de sécurité elle peut être sous la forme d'une dispersion/émulsion aqueuse. Par l'expression "sensiblement plane et uniforme" on entend que la couche de silicone ne comporte pas d'aspérités ou rugosités superficielles pouvant ternir la configuration plane de sa surface. Cette composition de silicone constituant la première couche, qui est soit en base solvant soit sans solvant, est durcie par réticulation par voie thermique suivant une réaction soit de polyaddition soit de polycondensation, par exemple en étant soumise à des températures allant de 70 à 220°C, avantageusement de 100 à 180°C, ou sous l'application d'une énergie radiante, telle qu'un rayonnement ultraviolet ou électronique. Dans le cas du traitement thermique, la couche de silicone peut être durcie en faisant passer le support sur laquelle elle est appliquée dans des fours thermiques dont la température peut varier de 100 à 220°C, avec un temps de séjour dans le four thermique pouvant aller de 2 secondes à une minute. La vitesse d'enduction est généralement déterminée par le profil de température dans les fours et par la longueur des fours. Dans le cas du traitement sous énergie radiante, la couche de silicone est amenée dans un four UV ou à rayonnement électronique et est durcie pratiquement instantanément, la composition de silicone de type radicalaire ou cationique ne nécessitant toutefois pas la présence d'un catalyseur lors de l'exposition à un rayonnement électronique. La couche plane de silicone a une épaisseur pouvant aller de 0,5 à 1,5 micromètre, avantageusement de 0,8 à 1,2 micromètres. Cette couche de silicone est, d'une manière générale, appliquée avec un système à cinq rouleaux pour les compositions sans solvant et avec un système du type à rouleau enducteur et racle de Mayer pour les compositions en base solvant ou aqueuse.

Suivant la présente invention, la seconde couche de silicone ou couche de silicone microstructurée tridimensionnellement est formée d'une composition de silicone comprenant un ou plusieurs polyorganosiloxanes et avantageusement un ou plusieurs polydiméthylsiloxanes à fonction acrylate et/ou époxy, et éventuellement d'un catalyseur d'activation en fonction des nécessités. Cette composition de silicone est sans solvant et est durcie soit par exposition à un rayonnement ultraviolet soit par exposition à un rayonnement électronique, auquel cas elle ne nécessite pas la présence d'un catalyseur d'activation. La dose d'UV nécessaire pour assurer une réticulation correcte de la silicone est d'une manière générale supérieure à 700 mJ/cm². Lorsque la composition de silicone comprend un ou des polydiméthylsiloxanes à fonction acrylate, et que la couche de silicone microstructurée est durcie par rayonnement UV (système radicalaire) on utilisera comme catalyseur un photoinitiateur cétonique, avantageusement du type benzophénone, dont un exemple spécifique est la 2-hydroxy-2-méthyl-1-phénylpropanone. Pour optimaliser l'adhérence de la couche microstructurée, on peut incorporer un agent d'adhérence tel que l'éther diglycidylique dipropoxylé de polydiméthylsiloxane. Dans le cas où la composition de silicone comprend un ou des polydiméthylsiloxanes à fonction époxy on utilisera comme catalyseur un photoinitiateur du type sel d'iodonium comme un tétrakis(pentafluorophényl)borate de diaryliodonium ou l'hexafluoroantimonate d'iodonium (système cationique). Les systèmes radicalaires sont d'une manière générale préférables aux systèmes cationiques car ils possèdent une meilleure stabilité des propriétés antiadhérentes au cours du temps mais nécessitent toutefois la présence d'un système d'inertage à l'azote au cours de la réaction de réticulation pour abaisser le taux d'oxygène de l'ambiance gazeuse sous 50 ppm. Tout comme la première couche de silicone, la composition de silicone utilisée pour former la seconde couche microstructurée peut contenir d'autres additifs tels que des charges, accélérateurs, inhibiteurs, pigments, tensioactifs. L'enduction de la couche de silicone microstructurée se fait d'une manière générale à l'aide d'un cylindre gravé à des vitesses pouvant aller de 10 à 600 m/minute. La quantité de silicone (polydiméthylsiloxane) variera en fonction de la gravure du cylindre, de la viscosité de la composition, de la viscosité des produits d'addition pouvant modifier le comportement rhéologique de la couche de silicone, de la température de la silicone. En fait, la silicone est transférée d'un rouleau gravé sur la surface de la première couche de silicone à enduire. La gravure du cylindre gravé est remplie par trempage dans un encrier contenant de la silicone. L'excès de silicone est généralement éliminé au moyen d'une racle. Un contre-rouleau de caoutchouc sera utilisé pour assurer le bon transfert de la couche de silicone. La gravure du cylindre déterminera la topographie de la couche de silicone, c'est-à-dire la microstructure tridimensionnelle désirée. La quantité de silicone déposée pourra varier de 3 à 25 g/m², avantageusement de 6 à 15 g/m². La microstructure tridimensionnelle formée par les première et seconde couches de silicone est avantageusement constituée de motifs microstructurés, plus particulièrement de motifs microgaufrés, dont la hauteur des crêtes peut aller de 5 à 50 micromètres, avantageusement de 10 à 25 micromètres. Par exemple, la gravure utilisée pourra présenter les caractéristiques suivantes : profondeur (hauteur) : 50 micromètres, ouverture : 100 micromètres, mesure diagonale de la pyramide : 500 micromètres, volume théorique : 15 cm³/m². La couche de silicone microstructurée qui est appliquée sur la surface plane de la première couche de silicone doit être réticulée aussi rapidement que possible par le rayonnement UV ou le faisceau électronique, et donc dans le cas du traitement par UV les lampes UV doivent être positionnées préférentiellement aussi près que possible du poste d'enduction de silicone. La puissance des lampes UV peut aller de 120 W/cm à 240 W/cm ou plus et détermine la vitesse d'enduction de la silicone microstructurée (approximativement 100 m/minute par 120 W/cm). Lors de l'enduction de la silicone microstructurée à l'aide d'un cylindre gravé spécial (gravure dite "inverse ou négative") sur la couche de silicone plane, cette dernière doit être déposée préalablement sur le support papier ou plastique, ou au cours d'une enduction séparée (processus de présiliconage), ou encore en tandem, c'est-à-dire sur la machine en train d'enduire la couche de silicone microstructurée. L'enduction de la couche de silicone microstructurée peut également se faire à l'aide d'un tamis rotatif, auquel cas la silicone est passée au travers du tamis en contact avec la surface à enduire de la première couche. Par exemple, un tamis utilisé peut répondre aux caractéristiques suivantes : tamis de 30 mesh; épaisseur de 200 micromètres, 15 % de surface d'ouverture, dimension des trous de 345 micromètres, volume théorique du fluide de silicone passant au travers : 30 cm³/m². Il n'est pas conseillé de réticuler la couche microstructurée par voie thermique car la température nécessaire pour la réticulation détruirait sa structure tridimensionnelle par fluage avant même de pouvoir la fixer par réticulation. De plus, l'inconvénient majeur du point de vue de la tenue de la structure spatiale du motif au cours de son enduction serait que la viscosité d'une composition de silicone traitée par voie thermique serait de l'ordre de 200 à 400 centipoises alors que traitée par rayonnement elle peut être supérieure à 1000 centipoises.

Si l'on enduit de la silicone sur un support tel que du papier, du polyester ou autre, la tension superficielle de ces supports est d'une manière générale toujours supérieure à la tension superficielle de la silicone. La conséquence immédiate qui en résulte est que la silicone va mouiller la surface du support et donc s'étendre sur celle-ci. A l'inverse, si l'on enduit de la silicone sur une surface qui présente une tension superficielle inférieure à celle de la silicone, comme par exemple une surface traitée au fluor, on assistera donc à une rétraction de la silicone pouvant conduire au démouillage; le film liquide de silicone se brise à la surface du support pour former un ensemble de gouttelettes séparées les unes des autres. Comme il est absolument nécessaire d'éviter toute déformation de la structure tridimensionnelle de la silicone lorsque celle-ci vient d'être déposée sur la surface du support, il faut idéalement que la surface du support ait la même tension superficielle que la silicone qui y est déposée et donc idéalement une surface de même nature que la silicone : une surface siliconée. Dans ce cas, la silicone que l'on enduit n'aura tendance ni à se rétracter ni à s'étaler. Sa structure normalement restera donc stable (mis à part l'effet de gravité sur les pants de la structure tridimensionnelle qui dépendra en grande partie de la viscosité de la silicone que l'on enduit - plus élevée elle sera, au mieux ce sera) jusqu'au poste de rayonnement UV ou électronique, où la couche de silicone microstructurée sera définitivement fixée par réticulation. Les tensions superficielles des couches de silicone se situent entre 19 et 24 mN/m (ou dynes/cm), avantageusement de 21 à 23 mN/m. La méthode généralement utilisée pour déterminer la tension superficielle est la méthode de la goutte d'Owens-Wendt à trois composantes (liquides utilisés : hexadécane, eau, glycérol, diiodométhane; température de mesure : 23°C). On notera qu'il y a très peu de différence au point de vue tension superficielle entre les compositions de silicone qu'elles soient traitées par voie thermique ou par rayonnement. Une couche de silicone traitée à la chaleur aura sensiblement la même tension superficielle qu'une couche de silicone traitée aux UV. La couche de silicone microstructurée peut par conséquent être aisément appliquée sur la surface plane d'une couche de silicone réticulée thermiquement.

Suivant l'invention, on dépose ensuite sur les première et seconde couches de silicone se solidarisant pour former ainsi une microstructure tridimensionnelle commune comportant des zones assurant des propriétés d'autoadhérence sensiblement régulièrement réparties à la surface du support un substrat ou film souple, sous la forme d'une solution liquide ou de pâte, dont la topographie de surface, après séchage par voie thermique, par exemple dans des fours thermiques, ou sous l'application d'un rayonnement UV ou électronique, sera la topographie sensiblement inverse de celle de la silicone microstructurée tridimensionnellement. En fait, les couches de silicone remplissent un double rôle; celui d'imposer une topographie inverse à la surface du film qui sera intimement mis en contact avec elles et celui d'agent d'antiadhérence qui facilitera la séparation du film qui a été appliqué sur la silicone microstructurée. En tant que film souple à utiliser tout film plastique pourra convenir, par exemple du chlorure de polyvinyle coulé soit en base solvant, soit sous forme d'organosol ou de plastisol. D'autres films coulés pourraient également être envisagés, tels que le polypropylène, le polyuréthanne, le polyéthylène. En fait, l'objectif principal du procédé de l'invention est de conférer au film coulé un fini de surface par microréplication, par exemple pour l'aspect visuel ou pour des raisons techniques diverses.

Suivant un mode particulièrement avantageux de l'invention, on utilise comme film souple un film plastique, par exemple un film de chlorure de polyvinyle dont une surface est recouverte d'un adhésif, de manière à conférer à l'adhésif une microstructure correspondant à l'image inverse de la silicone microstructurée. La couche d'adhésif sera dans ce cas, avantageusement, soit enduite directement sur la silicone microstructurée, soit pressée sur la silicone par laminage à l'aide d'un lamineur. Lors d'une enduction directe, l'adhésif sera sous forme liquide, par exemple en solution dans un solvant organique ou un mélange de solvants organiques ou en émulsion dans l'eau, ou sous forme solide, c'est-à-dire sous la forme d'un adhésif sans solvant qui est coulé à chaud sur la silicone microstructurée. Comme le processus d'enduction utilisé pour enduire l'adhésif sur la silicone doit être tel qu'il n'affecte pas la microstructure de la silicone par abrasion, celui-ci se fera de préférence en utilisant une extrudeuse à fente, un rouleau enducteur muni d'une racle ou d'une doctor bar. Comme type d'adhésifs on pourrait utiliser tous les adhésifs applicables dans le domaine envisagé. On citera, à cet égard, les adhésifs à base d'acrylique, de caoutchouc, de silicone, de polyuréthanne. Ces adhésifs peuvent être en base solvant, en base aqueuse ou sans solvant, à l'état fondu. Le choix de l'adhésif déterminera sa facilité à répliquer la microstructure de la silicone et le maintien plus ou moins durable de sa microstructure inverse lorsque l'adhésif sera ultérieurement appliqué sur un appui donné, tel que vitrine, tôle peinte, panneau. Conviennent particulièrement bien les résines autoadhésives autoréticulables à la chaleur, à base d'un copolymère acrylique en solution dans un mélange de solvants organiques, les résines autoadhésives réticulables par addition d'isocyanate, à base d'un copolymère acrylique en solution dans un mélange de solvants organiques, les copolymères acryliques en dispersion aqueuse, les monomères acryliques étant à cet effet préférentiellement l'acrylate de 2-éthylhexyle, l'acrylate de butyle et l'acide acrylique, et les adhésifs à base de caoutchouc naturel et/ou synthétique en solution ou non dans un mélange de solvants organiques. Ces adhésifs peuvent contenir un ou plusieurs additifs tels que des résines assurant un collage, antioxydants, plastifiants, charges, pigments ou analogue.

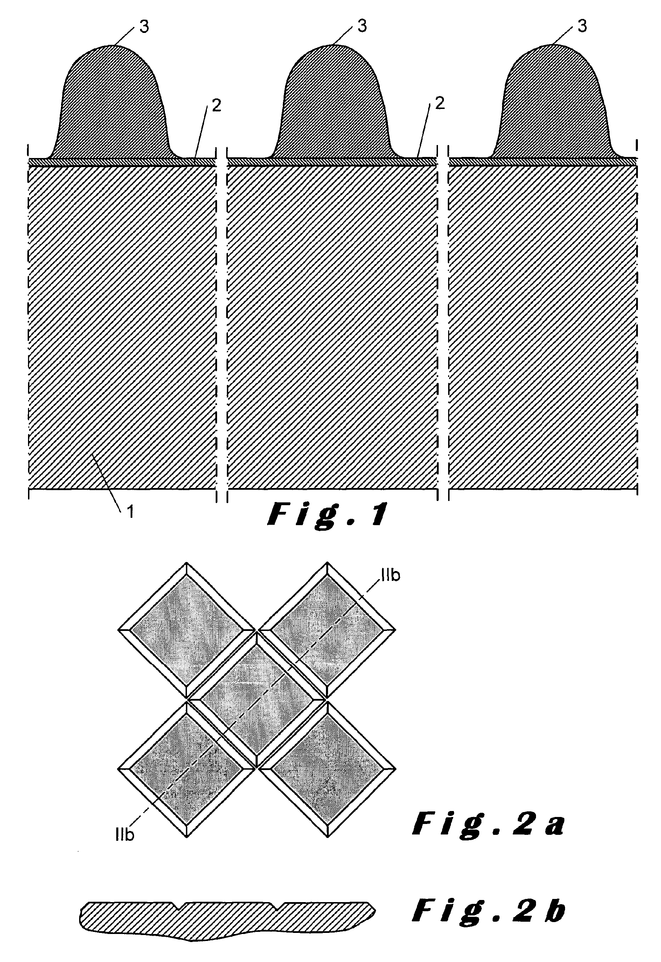

Pour une meilleure clarté de l'invention, la figure 1 des dessins annexés représente une vue en coupe, exagérément agrandie d'un support 1 sur lequel ont été appliquées respectivement une couche de silicone plane 2 et une couche de silicone microstructurée 3. Comme on peut le voir, celles-ci forment ensemble une microstructure tridimensionnelle comportant des crêtes constituées par la couche microstructurée 3 et des zones d'antiadhérence de fond constituées par la couche plane 2, régulièrement réparties à la surface du support, qui faciliteront la séparation du film avec adhésif ou non qui aura été déposé sur la silicone microstructurée.

Les essais et Exemples suivants servent à mieux illustrer l'invention mais ne constituent en aucun cas une limitation à celle-ci.

### Essais sur une installation pilote

Les matières utilisées, les conditions opératoires et les résultats des essais sont donnés dans les Tableaux 1 et 2 ci-après.

### 1. Enduction d'un "quadrillage" de silicone sur papier présiliconé.

L'enduction de la couche de silicone microstructurée ("quadrillée") se fait à l'aide d'une gravure dite "inverse", c'est-à-dire de pyramides sur la table du cylindre.

Caractéristiques de la gravure (voir figure 2a : vue en plan de la gravure, et figure 2b : vue en coupe suivant la ligne IIb).
Cylindre n° 58472 chromé.
Profondeur : 0,050 mm.
Ouverture :0,100 mm
Mesure diagonale de la pyramide : 0,500 mm.
Fond : 0,015 mm.

Le remplissage de la gravure se fait soit à l'aide d'une chambre fermée munie de racles, soit par trempage de la gravure dans le bain de silicone, l'excès de silicone à la surface de la gravure étant ensuite éliminé au moyen d'une racle (en acier, Nylon ou toute autre matière). La fixation de la couche de silicone microstructurée se fait en utilisant une batterie de lampes UV à mercure à pression moyenne d'une puissance de 200 W/cm.

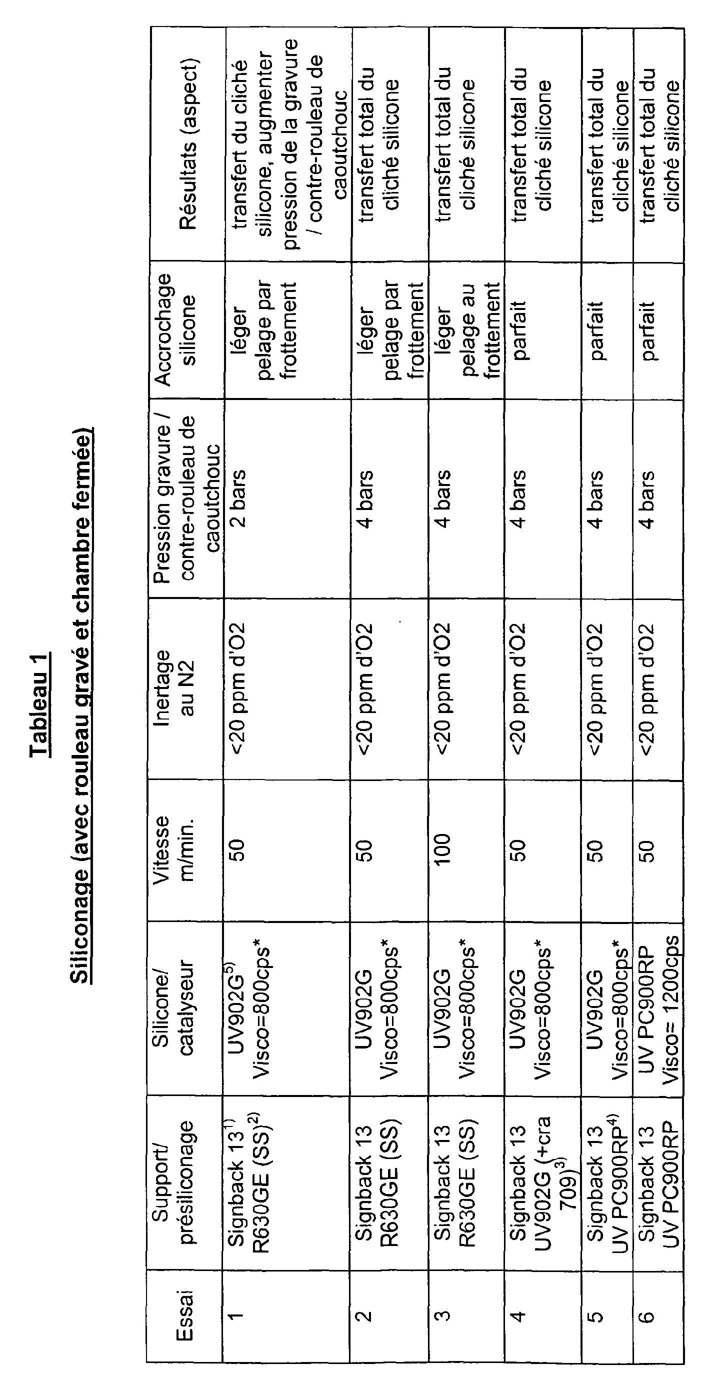

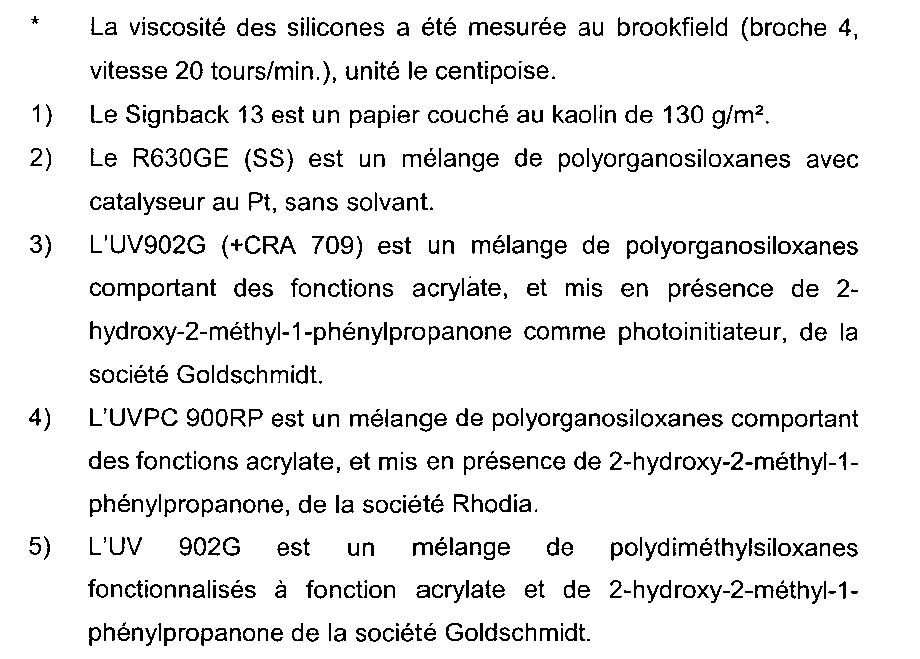

### 2. Enduction de l'adhésif

Formulation d'adhésif utilisée :
Copolymère acrylique en solution dans un mélange de solvants organiques : 17 kg.
Acétate de butyle (solvant principal) : 2,8 kg.
Réticulant : 0,160 kg.
Profil de températures de séchage : 60°C, 80°C, 100°C, 120°C.
Vitesse d'enduction : 20 m/minute.
Grammage de l'adhésif : 20-25 g/m².

**Tableau 2 :**

| **Enduction de l'adhésif** | | | |
|---|---|---|---|
| Exemple n° | Adhésif | Face | Résultats (aspect) |
| 1 | copolymère acrylique dans solvant | M8129¹⁾ | étalement acceptable de l'adhésif |
| 2 | copolymère acrylique dans solvant | M8129 | bon étalement de l'adhésif |
| 3 | copolymère acrylique dans solvant | M8129 | bon étalement de l'adhésif |
| 4 | copolymère acrylique dans solvant | M8129 | étalement acceptable de l'adhésif |

| | | | |
|---|---|---|---|
| 1) Le M8129 est une feuille de PVC blanc brillant de 90 micromètres d'épaisseur. | | | |

On peut donc voir que l'enduction d'un relief de silicone via une gravure dite inverse donne d'excellents résultats.

La figure 3 est une micrographie électronique à balayage de la surface de silicone microstructurée de l'Exemple n° 2 suivant l'invention (grossissements X 15 et X 30).

La figure 4 est une micrographie électronique à balayage de la surface de silicone microstructurée obtenue selon un procédé connu de la technique antérieure.

Selon ce procédé connu, la couche de silicone, déposée sur la face brillante du film de polyéthylène d'un papier polyéthyléné deux faces, est microembossé à chaud (110°C) et à basse vitesse (0,9 m/min) par un cylindre gravé; le contre-cylindre est un rouleau de caoutchouc silicone d'une dureté de 85 Shore et chauffé à 120°C, la pression exercée entre les deux cylindres étant de 22 N/mm.

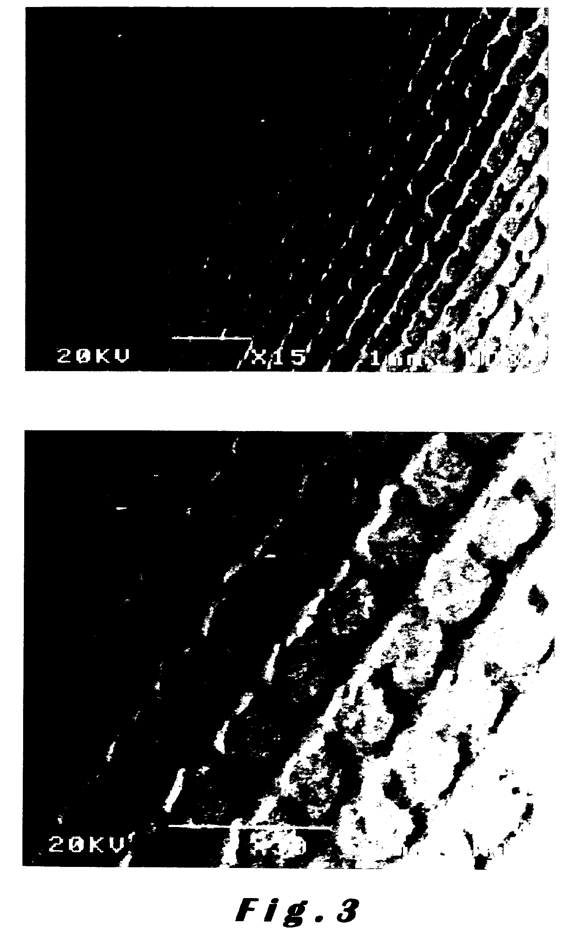

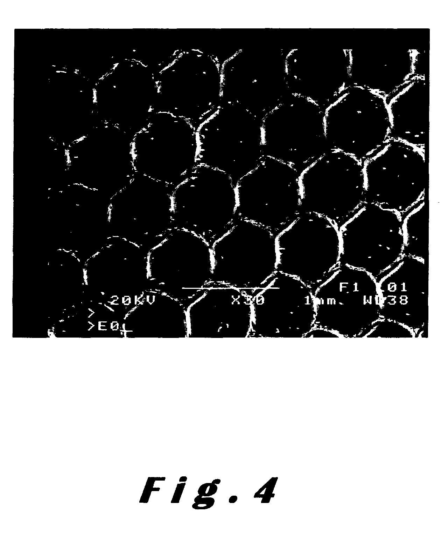

Comme on pourra le noter, les structure microgaufrées obtenues à la surface de la silicone (figure 3) sont très régulières et sont arrondies au niveau des crêtes, et évitent le transfert de l'image du pattern silicone à la surface du film souple de PVC, c'est-à-dire qu'il n'y a pas d'altération de l'aspect de surface du film de PVC, ce qui n'est pas le cas du microgaufrage de la figure 4, où la surface du film de PVC est altérée par les microstructures du papier polyéthyléné et siliconé dont les crêtes sont beaucoup plus effilées, celles-ci se voyant à travers le film de PVC et déformant celui-ci.

D'autres essais et résultats d'essais sont donnés dans les Tableaux 3 et 4 ci-après.

### 1. Enduction d'un quadrillage de silicone sur papier présiliconé.

Le mode opératoire est sensiblement le même que celui utilisé précédemment.

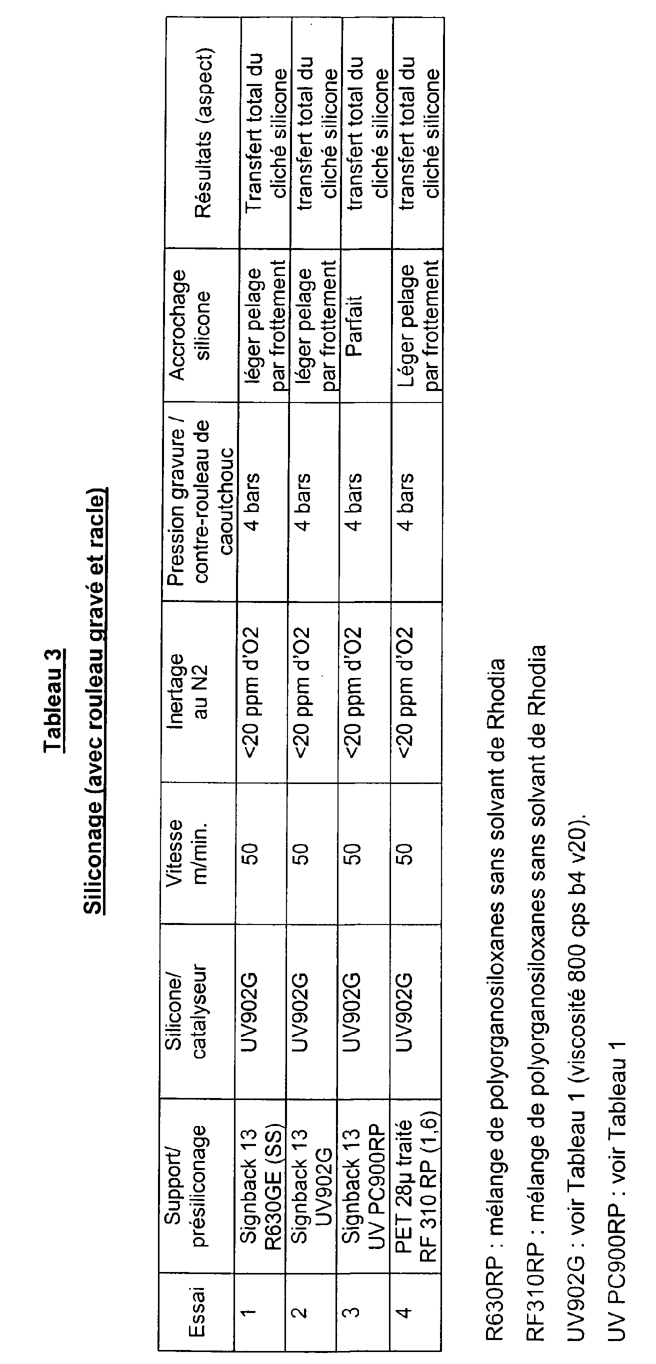

### 2. Enduction de l'adhésif

Formulations d'adhésif utilisées :
1. MP 500 (Solucryl 340 : copolymère acrylique en solution dans un mélange de solvants organiques).
Grammage : 24,5 g/m².
Viscosité : 135 cps (broche 4, v20, brookfield).
Profil de températures de séchage : 70°C, 90°C, 110°C, 140°C.
Vitesse d'enduction : 10 m/min.
2. MR 980 (Solucryl 615 : copolymère acrylique en solution dans un mélange de solvants organiques).
Grammage : 16 g/m².
Viscosité : 790 cps (broche n° 4, v20, brookfield).
Profil de températures de séchage : 70°C, 90°C, 110°C, 190°C.
Vitesse d'enduction : 20 m/min.

**Tableau 4**

| **Enduction de l'adhésif** | | | | | |
|---|---|---|---|---|---|
| Exemple n° | Papier présiliconé | Silicone | Adhésif | Face | Résultats (aspect) |
| Reference A | SIGNBACK 13 UV PC900RP | / | MP500 | M9829 polymère 75µ | bonne enduction de l'adhésif |
| 5 | SIGNBACK 13 R630GE (SS) | UV902G | MP500 | M9829 | bonne enduction de l'adhésif, quelques bulles |
| 6 | SIGNBACK 13 UV902G | UV902G | MP500 | M9829 | bonne enduction de l'adhésif, très peu de bulles |
| 7 | SIGNBACK 13 UV PC900RP | UV902G | MP500 | M9829 | bonne enduction de l'adhésif, quelques bulles |
| 8 | SIGNBACK 13 UV PC900RP | UV902G | MP500 | M2629 polymère 60µ | bonne enduction de l'adhésif, quelques bulles |
| 9 | SIGNBACK 13 R630GE (SS) | UV902G | MP500 | M2629 | bonne enduction de l'adhésif, quelques bulles |
| 10 | SIGNBACK 13 UV902G | UV902G | MP500 | M2629 | bonne enduction de l'adhésif, très peu de bulles |
| 11 | PET 28µ traité RF310RP (1,6) | UV902G | MP500 | BOPP 58µ clair | bonne enduction de l'adhésif, très peu de bulles |
| Référence B | SIGNBACK 13 UV PC900RP | / | MP500 | M2629 | bonne enduction de l'adhésif |
| Référence C | SIGNBACK 13 UV PC900RP | / | MR980 | M2629 | bonne enduction de l'adhésif |
| 12 | SIGNBACK 13 R630GE (SS) | UV902G | MR980 | M2629 | bonne enduction de l'adhésif, très peu de bulles |
| 13 | SIGNBACK 13 UV902G | UV902G | MR980 | M2629 | parfaite enduction de l'adhésif, pas de bulles |
| 14 | SIGNBACK 13 UV PC900RP | UV902G | MR980 | M2629 | bonne enduction de l'adhésif, très peu de bulles |
| 15 | SIGNBACK 13 UV PC900RP | UV902G | MR980 | M9829 | bonne enduction de l'adhésif, très peu de bulles |
| 16 | SIGNBACK 13 R630GE (SS) | UV902G | MR980 | M9829 | bonne enduction de l'adhésif, très peu de bulles |
| 17 | SIGNBACK 13 UV902G | UV902G | MR980 | M9829 | parfaite enduction de l'adhésif, pas de bulles |
| Référence D | SIGNBACK 13 UV PC900RP | / | MR980 | M9829 | bonne enduction de l'adhésif |

On notera que même avec un film de PVC souple très mince de 60 µm (M2629) on ne voit pas la trame de silicone.

Les principaux avantages du procédé de microstructuration de l'invention sont par conséquent outre le fait, comme il a déjà été précisé précédemment, d'obtenir une surface de silicone microstructurée sur n'importe quel type de substrat tel que papier (calandré ou glassine, couché), films plastiques (PET, PE, BOPP, PVC) et de pouvoir enduire la silicone à très grande vitesse, d'obtenir des motifs microstructurés extrêmement réguliers et dont les crêtes ne déforment pas le film sur lequel est appliquée la surface d'adhésif microrépliquée.

La principale utilisation d'un adhésif microstructuré est la facilité qu'il apporte lors de l'application, par exemple, de grands emblèmes sur des surfaces données. En effet, généralement il est nécessaire d'enlever et de réappliquer l'emblème pour mieux le positionner et une fois bien appliqué, il y a souvent lieu d'éliminer les poches d'air emprisonné sous le film autoadhésif lors de l'application ou les poches de gaz qui surviennent quelque temps après l'application. L'adhésif microstructuré suivant la présente invention permet un repositionnement aisé tout en évitant facilement les bulles d'air lors de l'application par une simple pression du doigt et permet d'éliminer au travers des microcanaux formés tout gaz qui pourrait éventuellement se développer après application.

Il doit être entendu que l'invention n'est nullement limitée aux formes de réalisation décrites et que bien des modifications peuvent être apportées à ces dernières sans sortir du cadre du présent brevet.

## Revendications

1. Procédé de microstructuration tridimensionnelle d'une surface de substrat souple, en particulier d'une surface d'adhésif, **caractérisé en ce qu'**il comprend l'application d'une première couche de silicone sensiblement plane et uniforme sur une surface d'un support, l'application sur la première couche de silicone d'une seconde couche de silicone microstructurée tridimensionnellement, lesdites première et seconde couches de silicone se solidarisant pour former ainsi une microstructure tridimensionnelle commune comportant des zones assurant des propriétés d'antiadhérence sensiblement régulièrement réparties à la surface du support, et le dépôt de la surface de substrat souple, en particulier de la surface d'adhésif sur les couches de silicone précitées de manière à ce que ladite surface de substrat souple, en particulier d'adhésif soit microstructurée essentiellement par réplication inverse de la microstructure tridimensionnelle commune formée par les première et seconde couches de silicone, lesdites couches de silicone étant fixées par durcissement.

2. Procédé suivant la revendication 1, **caractérisé en ce que** la microstructure tridimensionnelle formée par les première et seconde couches de silicone comporte des motifs microgaufrés.

3. Procédé suivant l'une ou l'autre des revendications 1 et 2, **caractérisé en ce qu'**on microstructure tridimensionnellement une surface d'adhésif.

4. Procédé suivant l'une quelconque des revendications 1 à 3, **caractérisé en ce que** la première couche de silicone comprend un polyorganosiloxane fonctionnalisé à groupements 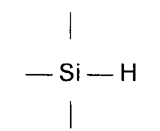 comme réticulant, et au moins un polyorganosiloxane fonctionnalisé pouvant réagir avec le réticulant par polycondensation.

5. Procédé suivant l'une quelconque des revendications 1 à 3, **caractérisé en ce que** la première couche de silicone comprend un polyorganosiloxane fonctionnalisé à groupements 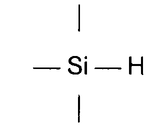 comme réticulant, et au moins un polyorganosiloxane fonctionnalisé à groupements 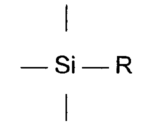 pouvant réagir avec le réticulant par polyaddition, R comportant au moins une insaturation éthylénique.

6. Procédé suivant l'une ou l'autre des revendications 4 et 5, **caractérisé en ce que** la première couche de silicone comprend un catalyseur d'activation de la réaction de réticulation précitée.

7. Procédé suivant la revendication 6, **caractérisé en ce que** le catalyseur d'activation est un catalyseur à base de platine ou de rhodium.

8. Procédé suivant l'une quelconque des revendications 4 à 7, **caractérisé en ce que** la première couche de silicone comprend en outre un ou plusieurs additifs choisis dans le groupe comprenant les modulateurs d'adhérence, les accélérateurs et inhibiteurs de réaction, les pigments, les agents tensioactifs, les charges.

9. Procédé suivant l'une quelconque des revendications 6 à 8, **caractérisé en ce que** la première couche de silicone est durcie par chauffage ou par exposition à un rayonnement ultraviolet.

10. Procédé suivant la revendication 9, **caractérisé en ce que** lorsque la couche de silicone est durcie par chauffage, elle est chauffée à des températures allant de 70 à 200°C, avantageusement de 100 à 180°C.

11. Procédé suivant l'une ou l'autre des revendications 4 et 5, **caractérisé en ce que** la première couche de silicone est durcie par exposition à un rayonnement électronique.

12. Procédé suivant l'une quelconque des revendications 4 à 11, **caractérisé en ce que** la première couche de silicone a une épaisseur allant de 0,5 à 1,5 micromètre, avantageusement de 0,8 à 1,2 micromètre.

13. Procédé suivant l'une quelconque des revendications 1 à 12, **caractérisé en ce que** la seconde couche de silicone précitée comprend au moins un polyorganosiloxane, avantageusement un polydiméthylsiloxane à fonction acrylate et un catalyseur du type cétonique, avantageusement du type benzophénone, et est durcie par exposition à un rayonnement ultraviolet.

14. Procédé suivant l'une quelconque des revendications 1 à 12, **caractérisé en ce que** la seconde couche de silicone précitée comprend au moins un polyorganosiloxane, avantageusement un polydiméthylsiloxane à fonction époxy et un catalyseur du type sel d'iodonium, et est durcie par exposition à un rayonnement ultraviolet.

15. Composition suivant l'une quelconque des revendications 1 à 12, **caractérisée en ce que** la seconde couche de silicone précitée comprend au moins un polyorganosiloxane, avantageusement un polydiméthylsiloxane à fonction acrylate et/ou époxy, et est durcie par exposition à un rayonnement électronique.

16. Procédé suivant l'une quelconque des revendications 2 à 15, **caractérisé en ce que** la microstructure tridimensionnelle formée par les première et seconde couches de silicone précitées est constituée de motifs microgaufrés, dont la hauteur des crêtes varie de 5 à 50 micromètres, avantageusement de 8 à 25 micromètres.

17. Procédé suivant l'une quelconque des revendications 1 à 16, **caractérisé en ce que** la seconde couche de silicone est appliquée sur la première couche en une quantité pouvant aller de 3 à 25 g/m², avantageusement de 6 à 15 g/m².

18. Procédé suivant l'une quelconque des revendications 1 à 17, **caractérisé en ce que** la première et la seconde couche de silicone ont une tension superficielle proche l'une de l'autre, allant de 15 à 25 mN/m, avantageusement de 21 à 23 mN/m.

19. Procédé suivant l'une quelconque des revendications 1 à 18, **caractérisé en ce que** le substrat et le support précités sont constitués de papier, notamment calandré ou couché, d'un film plastique, notamment de polyéthylène, polyester, polypropylène, chlorure de polyvinyle.

20. Procédé suivant l'une quelconque des revendications 3 à 19, **caractérisé en ce que** l'adhésif précité est déposé sur les première et seconde couches de silicone précitées soit en l'enduisant directement sur lesdites couches soit par laminage.

21. Procédé suivant la revendication 19, **caractérisé en ce que** dans le cas d'une enduction directe l'adhésif est soit sous forme liquide, avantageusement dans un solvant organique ou en émulsion dans l'eau, soit sous forme solide coulé à chaud.

22. Procédé suivant l'une quelconque des revendications 3 à 21, **caractérisé en ce que** l'adhésif est appliqué sur un film plastique souple, avantageusement un film de chlorure de polyvinyle.

23. Film microstructuré tridimensionnellement, et/ou film autoadhésif comportant une surface d'adhésif telle que microstructurée tridimensionnellement par le procédé suivant l'une quelconque des revendications 1 à 22, et comportant notamment des motifs décoratifs, publicitaires ou autres sur la surface opposée à la surface en contact avec la microstructure formée par les couches de silicone précitées.
